# EUROPEAN PATENT SPECIFICATION

(11) **EP 4 056 423 B1**
(45) Date of publication and mention of the grant of the patent: **20.08.2025**
(21) Application number: 22161238.5
(22) Date of filing: 10.03.2022
(51) Int. Cl.: B60Q 1/00, B60Q 1/18, B60Q 1/26, E01H 5/06

(54) **SNOWPLOW HEADLIGHT CONTROL SYSTEM AND METHOD**
SCHEINWERFERSTEUERSYSTEM UND -VERFAHREN FÜR EINEN SCHNEEPFLUG
SYSTÈME ET PROCÉDÉ DE COMMANDE DE PHARE DE CHASSE-NEIGE

(30) Priority: 12.03.2021 US 202117200466
(43) Date of publication of application: 14.09.2022
(73) Proprietor: SNO-Way International, Inc., Hartford, WI 53027 (US)
(72) Inventor: Brehmer, Jacob R., Hartford, 53027 (US); Wendorff, Terry C., Slinger, 53086 (US)
(74) Representative: Hoeger, Stellrecht & Partner Patentanwälte mbB

(56) References cited:
- EP-A1- 3 254 897
- EP-A2- 2 368 761
- WO-A1-03/066376
- WO-A1-2011/138708
- US-A1- 2016 332 563
- US-A1- 2019 263 316

## Description

### FIELD OF THE INVENTION

This invention generally relates to an auxiliary lighting system configured for use with auxiliary devices for vehicles.

### BACKGROUND OF THE INVENTION

Auxiliary devices mountable to automotive vehicles often have their own auxiliary lighting system. For example, one such auxiliary device is a snowplow. Snowplows are typically mounted to the front of automotive vehicles. However due to its overall size, the snowplow may obstruct the headlights of the vehicle. Obstruction of the headlights of the vehicle can prevent adequate light from illuminating the ground in front of the vehicle for the operator to properly see what is in front of the vehicle, and can prevent oncoming vehicles that are traveling toward the vehicle with the snowplow from properly seeing the vehicle or the snowplow. Furthermore, when the snowplow is positioned in front of the headlights, the light produced may be reflected back at the vehicle operator, making it more difficult to drive the vehicle. For this reason, auxiliary devices for trucks with snowplows will typically include an auxiliary lighting system such that the issues associated with obstructing or reflecting light from the vehicle is mitigated.

While the auxiliary lighting system can solve or mitigate the obstruction issues, it creates a new source of problems. Specifically, the lights of the auxiliary lighting system must include a means for control by the operator of the vehicle. Attempts have been made to create wiring harnesses that directly connect into the vehicle lighting system such that the power is directed to the vehicle lights, e.g., the vehicle headlights or vehicle marker lights, is directly sent to the auxiliary lighting system lights, e.g., auxiliary headlights or auxiliary marker lights. These wiring harnesses may be connected into connectors provided in the vehicle lighting system or may be directly spliced into the vehicle lighting system.

Unfortunately, as vehicles have become more sophisticated, directly connecting auxiliary lights into the vehicle lighting system in this manner may cause other problems. More particularly, many vehicle computers will monitor the state of the vehicle lights to determine whether they are operating properly. In some instances, when the auxiliary lighting system connects into the vehicle lighting system, the vehicle's computer can sense a change in the vehicle lighting system and generate a fault or error. Furthermore, accessing the various wires and connectors of the vehicle lighting system to properly connect into the vehicle lighting system may be difficult and time-consuming.

U.S. Patent No. 9,751,452 discloses a method and apparatus for installing and operating an auxiliary lighting system using a vehicle light plug, while U.S. Patent Pub. No. 2019/0263316 discloses an auxiliary lighting system that controls the auxiliary lights based on the operational state of the vehicle lights. WO 2011/138708 A1 discloses an automotive lighting system with a signal emitting device installed in a lamp socket. The lamp socket is connected to a lighting connection of a vehicle. The signal emitting device emits a signal if the lighting connection is energized. A lighting module is connected to an electrical power supply of the vehicle. The lighting module comprises a receiver, a control unit and a light source. The control unit is disposed to operate the light source in a first mode if a signal is received in the receiver, and in a second mode if the signal is not received.

Embodiments of the present invention are directed at improvements over the current state of the art which may overcome one or more of the problems outlined above. These and other advantages of the invention, as well as additional inventive features, will be apparent from the description of the invention provided herein.

### BRIEF SUMMARY OF THE INVENTION

In one aspect, embodiments of the invention provide a vehicle lighting system for use on a motor vehicle having an auxiliary device assembled on the motor vehicle is provided. The vehicle lighting system according to the invention is defined in claim 1. The vehicle lighting system includes a first lighting system located on a body of the vehicle. The first lighting system has a plurality of different lights. A second lighting system is located on the auxiliary device. The second lighting system has a plurality of different lights. A control circuit operates one or more of the plurality of different lights in the second lighting system based on an operating sequence of one or more of the plurality of different lights in the first lighting system.

The first lighting system includes a marker light, and the operating sequence of one or more of the plurality of different lights in the first lighting system includes turning the marker light off, then on, within a predetermined time period. The predetermined time period may range from 2 to 5 seconds. In more particular embodiments, the predetermined time period is 3 seconds.

The control circuit may include a microprocessor and a marker light sensor coupled to the microprocessor. Further, the marker light sensor may be a Hall-Effect sensor. In certain embodiments, the second lighting system includes a low-beam headlight, and the operating sequence of one or more of the plurality of different lights in the first lighting system turns the low-beam headlight on or off.

In some embodiments, the first lighting system includes a marker light, and wherein the low-beam headlight is turned on or off when the marker light is turned on, then off, then on within a predetermined time period. The predetermined time period may range from 2 to 5 seconds. In more particular embodiments, the predetermined time period is 3 seconds.

In a particular embodiment, the control circuit comprises one or more microprocessors, a low-beam headlight sensor, and a marker light sensor coupled to one of the one or more microprocessors, wherein the one of the one or more microprocessors detects the operating sequence based on data from the marker light sensor. In a further embodiment, upon detecting the operating sequence within the predetermined time period, one of the one or more microprocessors determines if the low-beam headlight is on or off based on data from the low-beam headlight sensor. If the low-beam headlight is on, one of the one or more microprocessors turns the low-beam headlight off, and if the low-beam headlight is off, one of the one or more microprocessors turns the low-beam headlight on.

In another aspect, embodiments of the invention provide a method of operating a vehicle lighting system for use on a motor vehicle having an auxiliary device assembled on the motor vehicle. The method includes the step of controlling one or more lights of a second lighting system based on an operating sequence of one or more lights of a first lighting system. The operating sequence of the one or more lights of the first lighting system includes turning one of the one or more lights of the first lighting system off, then on, a predetermined number of times within a predetermined time period.

In some embodiments, controlling one or more lights of the second lighting system based on the operating sequence of the one or more lights of the first lighting system includes controlling a low-beam headlight based on the operating sequence of the one or more lights of the first lighting system. In other embodiments, controlling one or more lights of the second lighting system comprises using a sensor to determine the operating sequence of the one or more lights of the first lighting system.

In other embodiments of the aforementioned method using a sensor to determine the operating sequence of the one or more lights of the first lighting system includes using a marker light sensor to determine the operating sequence of the one or more lights of the first lighting system. In more specific embodiments, using a marker light sensor comprises using a Hall-effect sensor.

In certain embodiments, turning one of the one or more lights of the first lighting system off, then on, the predetermined number of times within the predetermined time period calls for turning a marker light off, then on, the predetermined number of times within the predetermined time period. In particular embodiments, turning a marker light off, then on, the predetermined number of times within a predetermined time period comprises turning a marker light off, then on, one time within 2 to 5 seconds.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a schematic top illustration of a vehicle having an auxiliary device attached and an auxiliary lighting system;
FIG. 2 is an enlarged partial illustration of the vehicle of FIG. 1 including the auxiliary device and auxiliary lighting system;
FIG. 3 is an enlarged partial illustration of the vehicle of FIG. 1 including the auxiliary device and an alternative auxiliary lighting system;
FIG. 4 is an enlarged partial illustration of the vehicle of FIG. 1 including the auxiliary device and an alternative auxiliary lighting system;
FIG. 5 is an enlarged partial illustration of the vehicle of FIG. 1 including the auxiliary device and an alternative auxiliary lighting system;
FIG. 6 is a schematic illustration of an auxiliary light controller useable in the auxiliary lighting systems; and
FIG. 7 is a schematic circuit diagram for the auxiliary lighting system, in accordance with an embodiment of the invention.

While the invention will be described in connection with certain preferred embodiments, there is no intent to limit it to those embodiments. On the contrary, the intent is to cover all alternatives, modifications and equivalents as included within the scope of the invention as defined by the appended claims.

### DETAILED DESCRIPTION OF THE INVENTION

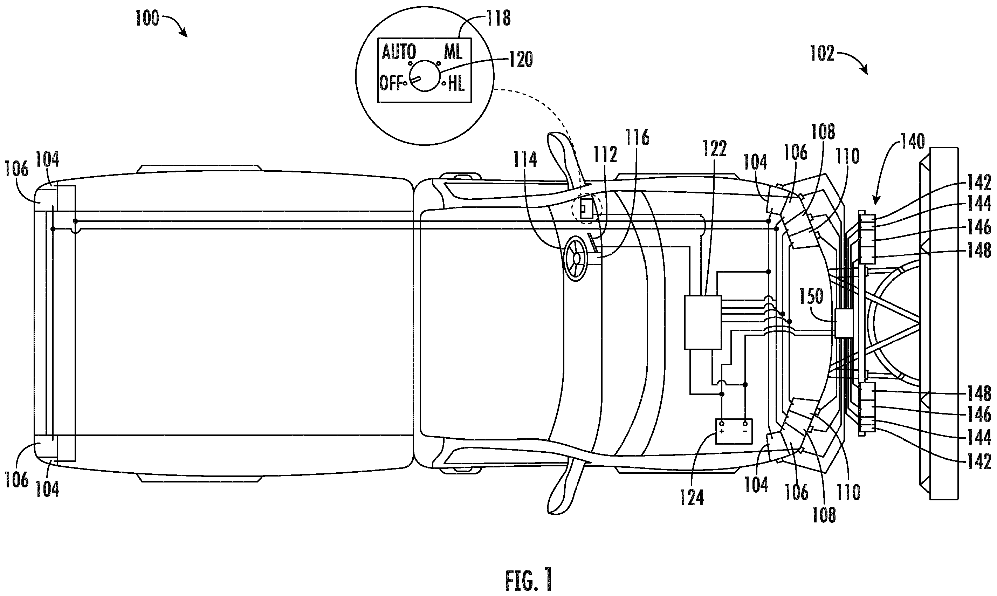

FIG. 1 provides a simplified illustration of a motor vehicle 100 having an auxiliary device 102 useable with the motor vehicle 100, and attached to the front of the motor vehicle 100. In this embodiment, the auxiliary device 102 is a snowplow. However, it is envisioned that other auxiliary devices, such as a sweeper, could be used on motor vehicle 100. While FIG. 1 shows the motor vehicle 100 as a pick-up truck, embodiments of the invention allow for the use of other vehicles such as a utility vehicle or a 4-wheeler, for example.

The motor vehicle 100 includes a vehicle lighting system that may include a plurality of different lights and components and a variety of different configurations. In the illustrated vehicle, the lighting system includes vehicle marker lights 104, vehicle turn signal lights 106, and vehicle headlights that include vehicle high beam lights 108 and vehicle low beam lights 110. It is noted that some of the lights may be combined. For instance, a vehicle marker light and a vehicle turn signal light may be provided by a same light bulb. Such a light bulb may have different filaments for each function or be operated at different intensities or for different amounts of times for different functions.

Further, a vehicle headlight may have a single bulb with different filaments for providing a vehicle high beam light and a vehicle low beam light. Alternatively, a vehicle headlight may be provided by two complete different bulbs with one providing the vehicle high beam light and one providing the vehicle low beam light. Further, a single filament may be provided for the vehicle headlight and the filament is operated at different intensities to provide a vehicle high beam light and a vehicle low beam light.

A vehicle headlight is a light used to provide significant illumination for illuminating the ground in front of the vehicle to assist the user in viewing objects over which the vehicle is driving. A vehicle turn signal light or vehicle marker light shall not be construed to be vehicle headlights. However, individual light bulbs of the vehicle may be operated in different manners to function as a particular light.

The vehicle lighting system also, in this embodiment, includes a manually-operable headlight control 112 for switching operational states of the vehicle headlight. More particularly, the manually-operable headlight control 112 can be used to switch between a high beam mode in which the vehicle high beam lights 108 are activated and a low beam mode in which the vehicle low beam lights 110 are activated. Again, in accordance with different style of headlights, this switching could include deactivating/activating one filament (e.g. a low beam filament or bulb) and activating/deactivating another filament (e.g. a high beam filament or bulb).

Alternatively, this could include leaving a low beam filament/bulb activate at all times and simply toggling a high beam filament/bulb on (high beam mode) and off (low beam mode). Further yet, this could include using a single filament and increasing the power supplied to the filament/bulb to transition from a low beam mode to a high beam mode and reducing the power supplied to the filament/bulb to transition from the high beam mode to a low beam mode. As such, while separate portions are demarcated in the figures for the vehicle high and low lights 108, 110 for ease of illustration, they need not be so configured in operation. This high and low beam features are equally applicable to the auxiliary lighting system 140 described below.

The manually-operable headlight control 112 is typically located proximate the steering wheel 114 and, in some embodiments, is in the form of a stalk that sticks out from the steering column 116. In other embodiments, the manually-operable headlight control 112 can also be used to activate a desired vehicle turn signal light 106.

The vehicle lighting system may also include a manually-operable vehicle light control 118. The manually-operable vehicle light control can control the operational state of the vehicle lighting system. For instance, the manually-operable vehicle light control 118 can have various different operating modes for the vehicle lighting system. In the illustrated embodiment, the manually-operable vehicle light control 118 is a physical knob that can be rotated. However, it could take the form of a virtual selector that can be done by voice command or input using buttons as part of a digital system.

The manually-operable vehicle light control 118 can have an "Off" mode where none of the vehicle lights are activated. It can have an "Auto" mode where the vehicle lights, such as the vehicle head lights will automatically turn on and off depending on the environmental conditions (e.g. amount of ambient light) in which the vehicle is operating. It can have a "Marker Light" mode (illustrated as an "ML" in FIG. 1) in which the headlights are not activated but marker lights 104 are active. Further, it can have a "Head Light" mode (illustrated as "HL" in FIG. 1) in which the headlights are activated and, depending on the vehicle, the marker lights 104 may or may not be active.

The vehicle lighting system may include a vehicle light controller 122. In the illustrated embodiment, the vehicle light controller 122 is operably connected to the various vehicle lights including the vehicle marker lights 104, vehicle turn signal lights 106, and vehicle headlights that include vehicle high beam lights 108 and vehicle low beam lights 110 by appropriate wiring. The vehicle light controller 122 is also operably connected to the manually-operable headlight control 112 and the manually-operable vehicle light control 118. The vehicle light controller 122 is also operably connected to a power source 124 illustrated in the form of a battery that provides power to the vehicle lighting system to power the various vehicle lights and the vehicle light controller 122.

The vehicle light controller 122 can receive appropriate signals from the manually-operable headlight control 112 and the manually-operable vehicle light control 118 and determine which vehicle lights to properly power. The vehicle light controller 122 may be a plurality of modules (e.g. one for the vehicle headlights, one for the vehicle marker lights and one for the vehicle turn signal lights 106, or any combination thereof).

The vehicle lighting system, typically the vehicle light controller 122, may also include a "flash-to-pass" feature where when the manually-operable vehicle light control 118 is in a mode where the vehicle headlights would normally be deactivated that when the manually-operable vehicle headlight control 112 is manipulated to otherwise change the operational state of the vehicle headlight that a brief amount of power is sent to the vehicle headlight to cause the vehicle headlight to flash. This is often used when a user wants to signal to other vehicle operators that the user is going to make a passing maneuver.

The vehicle light controller 122 will receive a signal from the manually-operable vehicle headlight control 112 that indicates a desire to change the operational state of the vehicle headlight and then cause such a vehicle headlight flash to occur. The flash may be any of the vehicle high beam lights 108, the vehicle low beam lights 110 or a combination thereof. The actuation of the manually-operable vehicle headlight control 112 is switched between fixed positions or is pushed to a different position and then it automatically springs back to its original position.

Embodiments of the invention provide an auxiliary lighting system 140 for use with the auxiliary device 102. The auxiliary lighting system 140 finds particular usefulness in providing auxiliary lighting when the vehicle lights of the vehicle lighting system are otherwise insufficient or blocked by the auxiliary device 102.

In the illustrated embodiment, the auxiliary lighting system 140 includes auxiliary marker lights 142, auxiliary turn signal lights 144, and auxiliary headlights that include auxiliary high beam lights 146 and auxiliary low beam lights 148 (referred to as a group as auxiliary lights 142, 144, 146, 148). The auxiliary lighting system 140 is operably connected to a power source to supply power to the various auxiliary lights. In this embodiment, the auxiliary lighting system 140 directly obtains power from the vehicle power source 124. The power to power the auxiliary lights 142, 144, 146, 148 is not provided by the vehicle lighting system. While this embodiment shares the vehicle battery to power both the vehicle lighting system and the auxiliary lighting system, a second power source could be provided to power the auxiliary lighting system 140.

An auxiliary light controller 150 is operably connected to the auxiliary lights 142, 144, 146, 148 to operably control the operational states of the auxiliary lights 142, 144, 146, 148. The auxiliary light controller 150 includes the appropriate internal circuitry to control power distribution to the auxiliary lights 142, 144, 146, 148 such that they auxiliary lights 142, 144, 146, 148 are appropriately powered and controlled for their desired operation. The auxiliary lights 142, 144, 146, 148 can be mounted to the auxiliary device 102 or could otherwise be mounted to the motor vehicle 100. Further, the auxiliary light controller 150 could be mounted on the motor vehicle 100, e.g., under the hood/in the engine compartment of the motor vehicle 100 or, as illustrated, mounted directly onto the auxiliary device 102.

The auxiliary lighting system 140 is configured to simulate at least one if not all of the lights of the vehicle lighting system so that the vehicle lighting system need not be relied upon when using the auxiliary device 102. This is particularly useful when the auxiliary device 102 obscures or otherwise reduces the effectiveness of the vehicle lights of the vehicle lighting system.

As noted above, due to the changes in complexity of vehicle lighting systems, directly connecting auxiliary lights into the vehicle lighting system can cause undesirable consequences and difficulties. Embodiments of the auxiliary lighting system of the instant invention attempt to overcome or reduce the disadvantages related to prior auxiliary lighting systems.

It is a feature of some embodiments, that the auxiliary lighting system 140 can be activated and controlled by using manually-operable vehicle controls that are part of the vehicle lighting system. More particularly, one or more of the auxiliary lights 142, 144, 146, 148 may be activated and/or manipulated using the manually-operable headlight control 112 and/or the manually-operable vehicle light control 118. Further still, the auxiliary lighting system 140 may be activated using the manually-operable headlight control 112. While not necessary in all embodiments, it is preferred, if the auxiliary lighting system 140 can be implemented without having to electrically connect to any of the vehicle lighting system. Note, the power source shall not be considered part of the vehicle lighting system and thus sharing a same power source, e.g. battery, shall not be considered electrically connecting the auxiliary lighting system 140 to the vehicle lighting system.

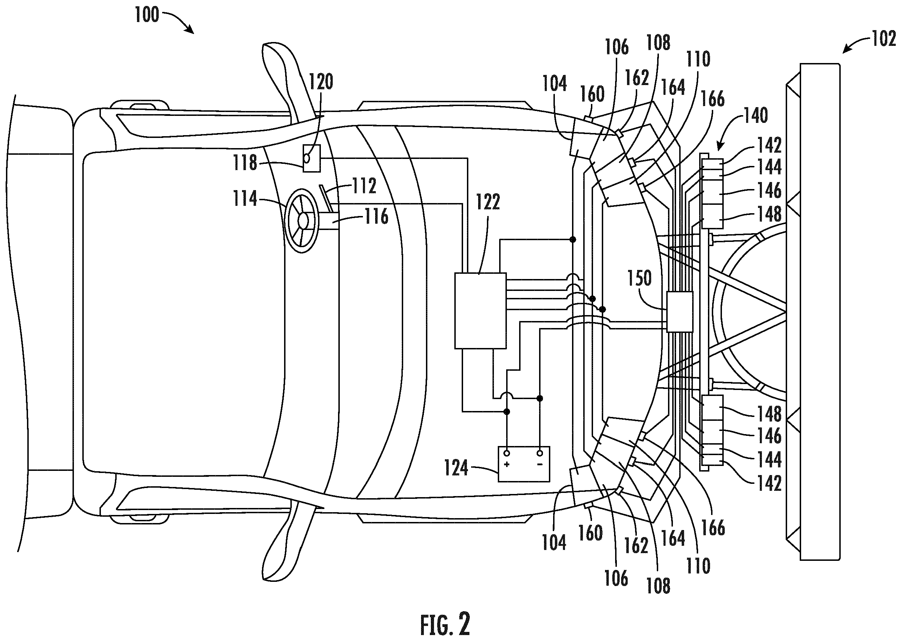

To facilitate operation of the auxiliary lighting system 140, the auxiliary lighting system 140 includes a plurality of sensors that sense the operational state of various ones of the vehicle lights. In the embodiment illustrated in FIG. 2, the auxiliary lighting system 140 includes vehicle marker light sensors 160, vehicle turn signal light sensors 162, vehicle head light sensors in the form of vehicle high beam light sensors 164 and vehicle low beam light sensors 166. Each sensor 160, 162, 164, 166 operably senses the operational state of the corresponding vehicle light. Further, each vehicle light sensor 160, 162, 164, 166 operably sends an operational state signal to the auxiliary light controller 150 such that the auxiliary light controller 150 can, at least in part, operably control the operation of the auxiliary lights 142, 144, 146, 148. In the illustrated embodiment, the sensors 160, 162, 164, 166 are wired directly to the auxiliary light controller 150. However, in other embodiments, the vehicle light sensors 160, 162, 164, 166 can wirelessly communicate with the auxiliary light controller 150 using any wireless communication protocol such as Bluetooth, Wi-Fi, infrared, sonar, etc.

One independent feature of the auxiliary lighting system 140 is that the auxiliary lighting system 140 activates upon activation of the vehicle marker lights 104. The auxiliary lighting system 140 is thus configured to activate when auxiliary light controller 150 receives a vehicle marker light operational state signal from one or more of the vehicle marker light sensors 160 that indicates that one or more of the vehicle marker light sensors 160 is active. The reason for activating the auxiliary lighting system based on an active operational state of the vehicle marker light 104 is that, as outlined above, most vehicles include an operational state for the vehicle lighting system in which the marker lights 104 may be active while the vehicle headlights are inactive, except during flash to pass activities. Thus, a user may activate the auxiliary lighting system 140 using controls that are part of the standard vehicle lighting system to activate the auxiliary lighting system 140. More particularly, the user can simply switch the manually-operable vehicle light control 118 to Marker Light mode to activate the auxiliary lighting system 140 without also turning on the vehicle headlights.

With the manually-operable vehicle light control 118 in Marker Light mode, the vehicle marker lights 104 will activate. The activation of the vehicle marker lights 104 will be sensed by the vehicle marker light sensors 160 and a vehicle marker light operational state signal will be sent to the auxiliary light controller 150, and the auxiliary light controller 150 will transition to an active state. In some implementations, activation of the auxiliary light controller 150 upon receipt of the vehicle marker light operational state signal indicating that the vehicle marker light is active will cause the auxiliary light controller 150 to automatically activate the auxiliary headlight, e.g. one or both of the auxiliary high beam light 146 and/or auxiliary low beam light 148.

In the embodiment illustrated in FIG. 2, the vehicle light sensors 160, 162, 164, 166 can be photoelectric devices that sense the intensity of light produced by the corresponding vehicle lights 104, 106, 108, 110. Typically, the vehicle light sensors 160, 162 164, 166 are aimed away from the auxiliary device 102 and toward the corresponding vehicle lights 104, 106, 108, 110. In one implementation, the vehicle light sensors 160, 162, 164, 166 are directly secured to the outer lens of the corresponding vehicle lights 104, 106, 108, 110.

These vehicle light sensors 160, 162, 164, 166 do not electrically connect into the vehicle lighting system. Because these vehicle light sensors 160, 162, 164, 166 do not electrically connect into the vehicle lighting system, the problems outlined above, related to conventional auxiliary lighting systems, do not occur. More particularly, the computer of the motor vehicle 100 that monitors various operations of the vehicle will not get signals that changes in the vehicle lighting system have occurred nor will there be false signals that a trailer or other device is being towed by the vehicle such that any backup cameras or sensors are deactivated, such as with systems that connect into the trailer plug of a vehicle.

As such, the vehicle marker light sensor 160 will monitor the intensity of the vehicle marker light 104 and send a corresponding vehicle marker light operational state signal to the auxiliary light controller 150. Based on this vehicle marker light operational state signal, the auxiliary light controller 150 will activate or keep deactivated the auxiliary headlights (e.g., send, or not send, power to the auxiliary head lights).

In a particular embodiment, the auxiliary light controller 150 has an auxiliary light control on state wherein at least one of the auxiliary high beam light 146 and the auxiliary low beam light 148 is active and an auxiliary light control off state wherein both of the auxiliary high beam light 146 and the auxiliary low beam light 148 are inactive. The auxiliary light controller 150 switches from the auxiliary light control off state to the auxiliary light control on state upon receipt of a vehicle marker light operational state signal indicating that at least one vehicle marker light 104 is active.

Further, in some implementations, the auxiliary light controller 150 will immediately switch from the auxiliary light control on state to the auxiliary light control off state when the vehicle marker light operational state signal indicates that the vehicle marker light 104 is inactive. Alternatively, in some embodiments, the auxiliary light controller 150 will switch from the auxiliary light control on state to the auxiliary light control off state only after a predetermined amount of time has passed after a vehicle marker light operational state signal indicating that the vehicle marker light 104 is inactive has been received. This can help prevent flickering of the auxiliary headlights and reduce the likelihood of undesirable turning off of the auxiliary headlights.

In some implementations, a further independent feature is that the auxiliary light controller 150 will operably control the auxiliary marker lights 142, e.g., by controlling power thereto, such that the auxiliary marker lights 142 match the operational state of the vehicle marker lights 104.

A further independent feature of some implementations is that the manually-operable controls of the vehicle lighting system can be used to control the auxiliary headlight. More particularly, the user can use the manually-operable headlight control 112 to switch between an auxiliary high beam mode in which the auxiliary high beam light 146 is activated and an auxiliary low beam mode in which the auxiliary low beam light 148 is activated. Typically, in the auxiliary high beam mode, the auxiliary low beam light 148 is deactivated and in the auxiliary low beam mode, the auxiliary high beam light 146 is deactivated.

However, as outlined above for the vehicle headlight, switching between a high beam and low beam may simply be done by leaving the low beam active and activating the high beam function. Alternatively, a change in power may be provided. However, any of these situations can be considered controlling both an operational state of the auxiliary high beam light and the operational state of the auxiliary low beam light. For example, controlling an operational state of the auxiliary high beam and controlling the operational state of the auxiliary low beam light may be increasing/decreasing power to a single filament/bulb, deactivating/activating one filament and activating/deactivating another filament, leaving one filament/bulb active while activating/deactivating a second filament (e.g., leaving the low beam active at all times while toggling the high beam on and off).

More particularly, the auxiliary light controller 150 receives a vehicle headlight operational state signal from the vehicle headlight sensor, illustrated in the form of vehicle high beam light sensors 164 and vehicle low beam light sensors 166 related to the operational state of the vehicle headlights. The auxiliary light controller 150 controls an operational state of the auxiliary high beam light 108 based on the vehicle headlight operational state signal and controls the operational state of the auxiliary low beam light 110 based on the vehicle headlight operational state signal.

When the auxiliary light controller 150 senses a change in the operational state of the vehicle headlight, the auxiliary light controller 150 will also make a change in the operational state of the auxiliary head light. For example, when the auxiliary light controller 150 receives a vehicle headlight operational signal that one or both of the vehicle high beam light 108 and/or the vehicle low beam light 110 has been activated the auxiliary light controller 150 can switch between the auxiliary high beam mode and the auxiliary low beam mode.

Because vehicles are typically equipped with the flash to pass capabilities where the vehicle headlight will activate upon manipulation of the manually-operable headlight control 112 even with vehicle headlight in an inactive state, this flash to pass capability can be used to signal a change in the operational state of the vehicle headlights which is used to trigger a change in the operational state of the auxiliary headlights, e.g., a changing between the auxiliary high beam mode and the auxiliary low beam mode. A significant benefit of this arrangement is that the user is already trained to switch between dims and brights using the same exact control for the vehicle head lights. Further, this avoids requiring a user to find a switch on a separate controller of the auxiliary device to switch between the auxiliary low beam mode and the auxiliary high beam mode, which can cause a user to take their eyes off of their surrounding environment.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

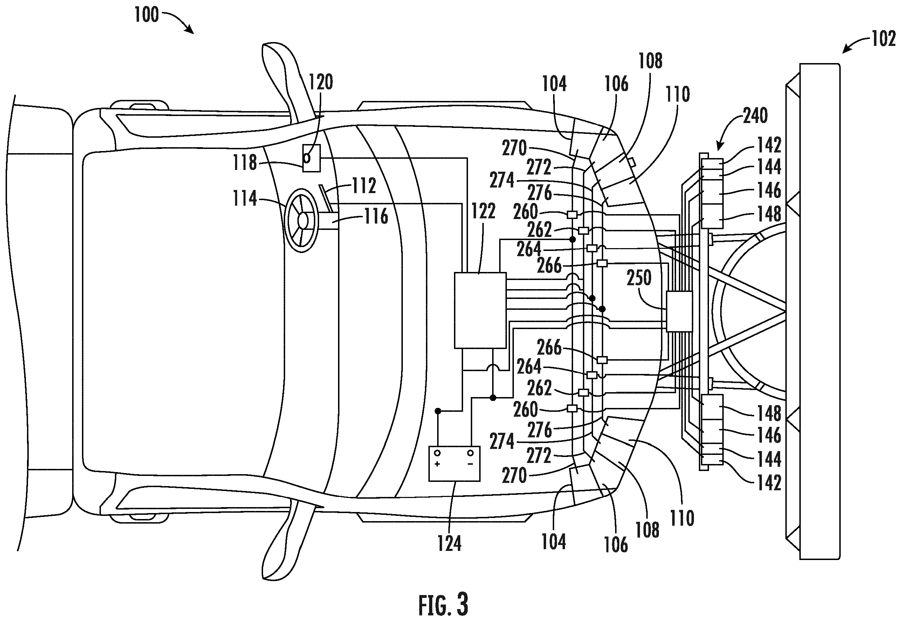

FIG. 3 is an enlarged partial illustration of the motor vehicle 100 of FIG. 1 including the auxiliary device 102 and an alternative auxiliary lighting system 240. The auxiliary lighting system 240 of FIG. 3 includes vehicle marker light sensors 260, vehicle turn signal light sensors 262, vehicle head light sensors in the form of vehicle high-beam light sensors 264, and vehicle low-beam light sensors 266, which are operably connected to an auxiliary light controller 250.

Again, the vehicle light sensors 260, 262, 264, 266 do not electrically connect into the vehicle lighting system to avoid the problems outlined above. However, in certain embodiments, the vehicle light sensors 260, 262, 264, 266 are Hall-Effect sensors that sense the magnetic field of a vehicle light wire associated with a corresponding vehicle light 104, 106, 108, 110. More particularly, vehicle marker light sensors 260 sense the magnetic field produced by vehicle marker light wires 270 associated with activating the vehicle marker lights 104 to create a vehicle marker light operational state signal.

In a specific embodiment, the vehicle turn signal light sensors 262 sense the magnetic field produced by vehicle turn signal light wires 272 associated with activating the vehicle turn signal lights 106 to create a vehicle turn signal light operational state signal. Vehicle high beam light sensors 264 sense the magnetic field produced by vehicle high beam light wires 274 associated with activating the vehicle high beam lights 108 to create a vehicle high beam light operational state signal. Vehicle low beam light sensors 266 sense the magnetic field produced by vehicle low beam light wires 276 associated with activating the vehicle low beam lights 110 to create a vehicle low beam light operational state signal.

More particularly, when power is sent across any of the wires 270, 272, 274, 276, the magnetic field generated thereby will change. This will change the signal sent by the corresponding vehicle light sensors 260, 262, 264, 266 allowing the auxiliary light controller 250 change operation and properly power the desired auxiliary lights. While wires extending between the vehicle light controller 122 and the corresponding vehicle lights 104, 106, 108, 110 are sensed, other wires associated with activating the particular vehicle lights 104, 106, 108, 110 may be sensed. For instance, wires extending between the vehicle light controller 122 and the manually-operable headlight control 112 and the manually-operable vehicle light control 118 may be sensed to produce the appropriate vehicle light operational state signals.

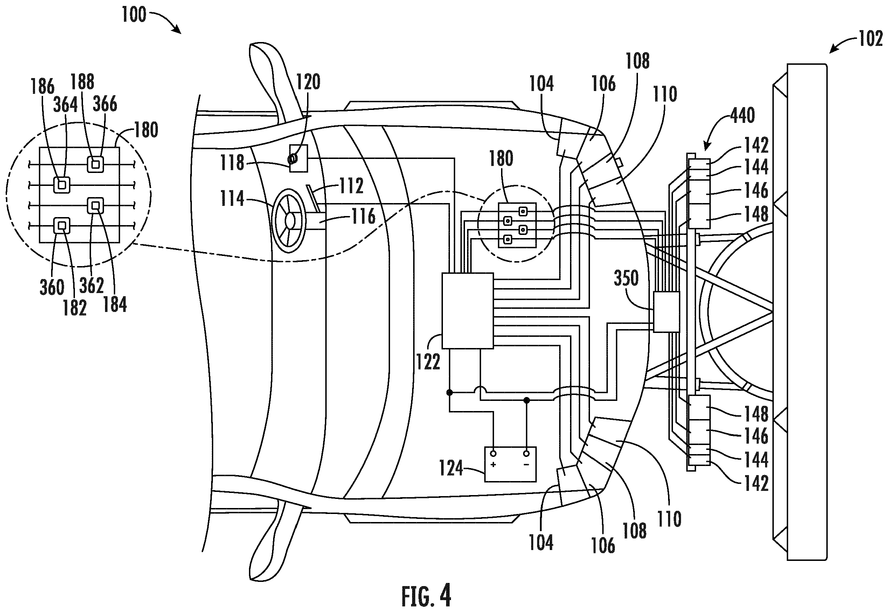

FIG. 4 illustrates a further embodiment of an auxiliary lighting system 340 for use with auxiliary device 102. This auxiliary lighting system 340 operates in substantially the same way as the prior auxiliary lighting systems 140, 240. However, in this embodiment, the auxiliary lighting system 340 directly electrically connects into the vehicle lighting system.

In this system, the vehicle lighting system further includes a fuse box 180 that includes a vehicle marker light fuse 182, a vehicle turn signal light fuse 184, one or more vehicle headlight fuses illustrated in the form of a vehicle high beam light fuse 186, and a vehicle low beam light fuse 188.

The auxiliary lighting system 340 includes vehicle marker light sensor 360, vehicle turn signal light sensor 362, vehicle head light sensor in the form of vehicle high beam light sensor 364 and vehicle low beam light sensor 366. These sensors are fuse circuit taps that plug into the slot where the standard fuse plugs into the vehicle lighting system. Here, the corresponding vehicle light operational signals are in the form of electrical current or electrical voltage sensed using the fuse circuit taps. This system electrically connects into the vehicle lighting system, but still overcomes some of the problems with prior systems in that the particular location of the tap may not cause computer errors. The amount of load is so limited that the system 340 does not typically cause computer errors, and it does not plug into trailer plugs that can disable back up cameras or sensors.

A further auxiliary lighting system, not illustrated, uses direct wire taps that pierce through the insulation of wires associated with activating the vehicle lights 104, 106, 108, 110. These direct wire taps directly electrically connect into the vehicle lighting system.

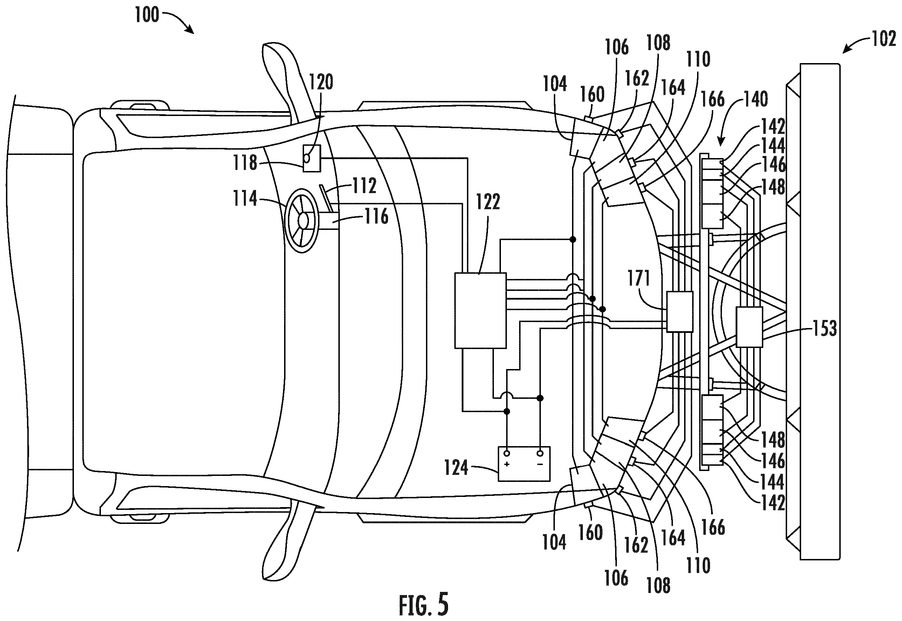

FIG. 5 illustrates a further implementation. In this embodiment, there is wireless communication operably between the vehicle light sensors 160, 162, 164, 166 and the auxiliary light controller 153. In this embodiment, a wireless radio 171 sends signals to the auxiliary light controller 153 wirelessly. In alternative embodiments, each vehicle light sensor 160, 162, 164, 166 could include a wireless radio and directly wirelessly communicate with the auxiliary light controller.

The vehicle light controller 122 and auxiliary light controller 153 shall have all necessary microprocessors, storage, communication circuits (e.g. which may include among other things wireless radios and receivers), power control circuitry (e.g. for controlling power to the corresponding auxiliary lights, which may include, among other things, switches and relays) and other electrical devices necessary to perform the required functions thereof. These electrical devices may be in a single module or separated into separate modules. Further, some parts of the controllers may be located on the motor vehicle 100 while other parts of the controllers may be located on the auxiliary device 102.

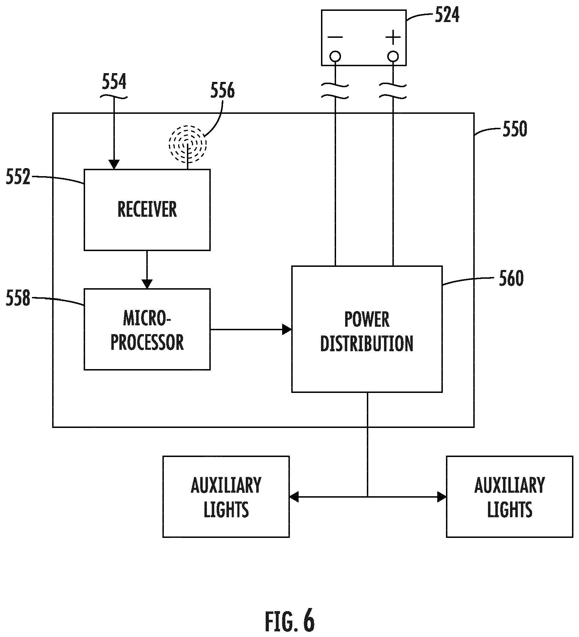

FIG. 6 is a schematic representation of an auxiliary light controller 550 usable in one or more of the auxiliary lighting systems described above. The auxiliary light controller 550 includes a receiver 552 configured to receive signals from, one or more of the vehicle light sensors. The receiver 552 may receive the signals via wired connection 554 or wireless communication 556 or a combination thereof.

The receiver 552 communicates the signals to a microprocessor 558. The microprocessor 558 can use the signals to determine how to properly control the various auxiliary lights of the auxiliary lighting system. The microprocessor 558 can then control power distribution circuitry 560 that properly regulates power from a power source 524. Again, the power source 524 could be the standard power source 124 provided by the motor vehicle 100 (e.g. the battery) or alternatively could be a dedicated power source provided for the auxiliary lighting system. However, such a dedicated power source could be recharged using the standard vehicle electrical system (e.g., an alternator).

The power distribution circuitry 560 could be provided by appropriate switches, relays, transistors, field-effect transistors, etc. In some embodiments, the auxiliary light controller 550 does not require a microprocessor. For example, the signals sent from the vehicle light sensors can be used by the power distribution circuitry 560 to adjust the power supplied to the various auxiliary lights, such as by way of appropriately wired switches, relays , transistors, field-effect transistors, etc.

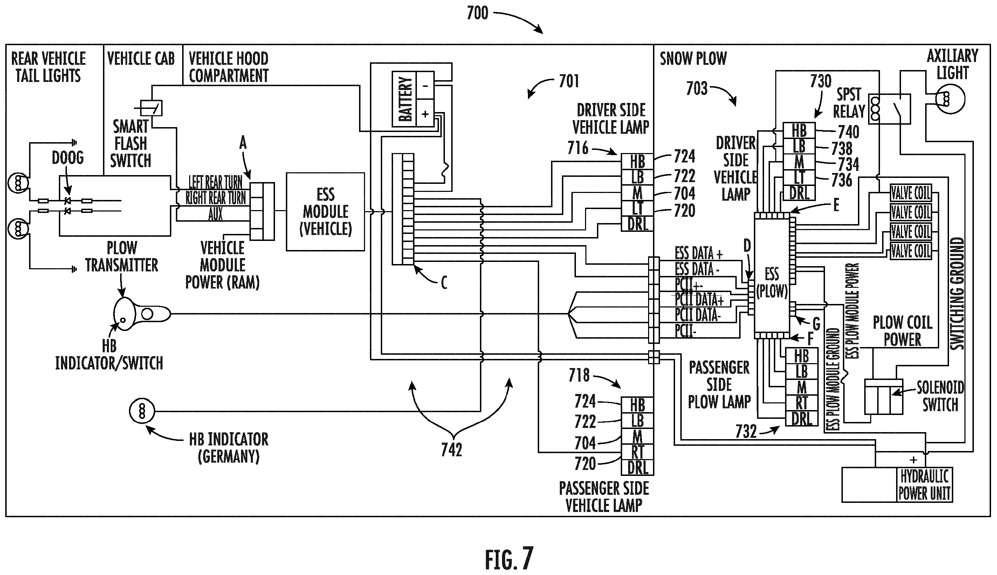

FIG. 7 is a schematic diagram illustrating a vehicle lighting system 700 for the motor vehicle 100 (see FIGS. 1-4). As explained above, the motor vehicle 100 has its first lighting system 701 with a plurality of different vehicle lights and a second lighting system 703, located on the auxiliary device 102, with its own plurality of different vehicle lights. In the embodiment of FIG. 7, the first lighting system 701 includes a driver side vehicle lamp 716 and a passenger side vehicle lamp 718. The driver side vehicle lamp 716 and the passenger side vehicle lamp 718 may each include a marker light 704, right and left turn signals 720. Typically, the driver side vehicle lamp 716 and the passenger side vehicle lamp 718 each include a low-beam headlight 722 and a high-beam headlight 724.

**In** a further embodiment, the auxiliary device 102 is a snow plow, and the second lighting system 703 is attached to some portion of the snow plow assembly, which includes the snow plow 102 and the apparatus for attaching the snow plow 102 to the motor vehicle 100. Similarly, the second lighting system 703 may include a driver side plow lamp 730 and a passenger side plow lamp 732. The driver side plow lamp 730 and the passenger side plow lamp 732 may each include a marker light 734, right and left turn signals 736. Typically, the driver side plow lamp 730 and the passenger side plow lamp 732 each include a low-beam plow headlight 738 and a high-beam plow headlight 740.

FIG. 7 also illustrates an embodiment of a control circuit 742 that controls one or more lights of a second lighting system 703 based on an operating sequence of one or more lights of a first lighting system 701. The operating sequence of the one or more lights of the first lighting system 701 typically includes turning one of the one or more lights of the first lighting system 701 off, then on, a predetermined number of times within a predetermined time period. The predetermined time period may range from 2 to 5 seconds. In more particular embodiments, the predetermined time period is 3 seconds.

As explained above, the first lighting system 701 has a plurality of different lights, e.g., marker lights, turn signals, headlights, etc. A second lighting system 703 is located on the auxiliary device 102. In the embodiment shown, the second lighting system 703 has the same plurality of different lights as the first lighting system 701. The control circuit 742 operates one or more of the plurality of different lights in the second lighting 703 system based on an operating sequence of one or more of the plurality of different lights in the first lighting system 701.

In the embodiment of FIG. 7, the first lighting system 701 includes a marker light 704, and the operating sequence of one or more of the plurality of different lights in the first lighting system 701 includes turning the marker light 704 off, then on, within a predetermined time period. The predetermined time period may range from 2 to 5 seconds. In more particular embodiments, the predetermined time period is about 3 seconds.

The control circuit 742 may include one or more microprocessors, as might be found in the vehicle light controller 122 and the auxiliary light controller 153 of FIG. 5. The control circuit 742 may also include a marker light sensor 160 and an auxiliary device low-beam headlight sensor 266 (shown in FIGS. 2, 3, and 5) each of which is coupled to one of the one or more microprocessors. Further, the marker light sensor 160 and auxiliary device low-beam headlight sensor 266 may be Hall-Effect sensors or a similar type of sensor that senses the magnetic field in the wire supplying power to the marker light 104. In certain embodiments, the second lighting system 703 includes the auxiliary device low-beam headlight 738, and the operating sequence of one or more of the plurality of different lights in the first lighting system 701, e.g., the marker light 104, turns auxiliary device low-beam headlight 738 on or off.

In specific embodiments, the marker light 104 of the first lighting system 701 is turned on, then off, then on within the aforementioned predetermined time period. When the control circuit 742 detects this operating sequence, via the marker light sensor 160, the low-beam headlight 722 of the second lighting system 703 is turned on or off depending on its operating state when the operating sequence is performed. As stated above, the predetermined time period may range from 2 to 5 seconds, though time periods both shorter and longer are envisioned. In more particular embodiments, the predetermined time period is set at 3 seconds. For example, turning the marker light off, then on, one time within 2 to 5 seconds will cause the control circuit 742 to turn off the low-beam headlight 738, and the high-beam headlight 740, if being used.

As stated above, the control circuit 742 may include a one or more microprocessors, the auxiliary device low-beam headlight sensor 266, and the marker light sensor 160 coupled to one of the one or more microprocessors, such that one of the one or more microprocessors detects the operating sequence based on data from the marker light sensor 160. In a further embodiment, upon detecting the aforementioned operating sequence within the predetermined time period, the one of the one or more microprocessors the determines if the current operating state of the low-beam headlight 738 is on or off, based on data from the auxiliary device low-beam headlight sensor 266. Then, in response the detecting the operating sequence, if the low-beam headlight 738 is on, the one of the one or more microprocessors in control circuit 742 turns the low-beam headlight 738 off, and will also turn off the high-beam headlight 740, if it is turned on. Conversely, if the low-beam headlight 738 is off, the one of the one or more microprocessors control circuit 742 turns the low-beam headlight 738 on.

## Claims

1. A vehicle lighting system (700) for use on a motor vehicle (100) having an auxiliary device (102) assembled on the motor vehicle (100), the vehicle lighting system (700) comprising:
a first lighting system (701) configured to be located on a body of the motor vehicle (100), the first lighting system (701) having a plurality of different lights (104, 106, 108, 110, 704, 716, 718, 720, 722, 724);
a second lighting system (140, 240, 340, 703) configured to be located on the auxiliary device (102), the second lighting system (140, 240, 340, 703) having a plurality of different lights (142, 144, 146, 148, 730, 732, 734, 736, 738, 740);
a control circuit (150, 153, 250, 550, 742) operating one or more of the plurality of different lights in the second lighting system (140, 240, 340, 703) based on an operating sequence of one or more of the plurality of different lights in the first lighting system (701);
**characterized in that** the first lighting system (701) includes a marker light (104), and that the operating sequence of one or more of the plurality of different lights in the first lighting system (701) includes turning the marker light (104) off, then on, within a predetermined time period.

2. The vehicle lighting system (700) of claim 1,
wherein the predetermined time period ranges from 2 to 5 seconds,
wherein in particular the predetermined time period is 3 seconds.

3. The vehicle lighting system (700) of claim 1 or 2, wherein the control circuit (150, 153, 250, 550, 742) comprises one or more microprocessors and a marker light sensor (160, 260, 360) coupled to one of the one or more microprocessors, wherein in particular the marker light sensor (160, 260, 360) operably senses the operational state of the marker light (104),wherein in particular the marker light sensor (160, 260, 360) is a Hall-effect sensor.

4. The vehicle lighting system (700) of any preceding claim, wherein the second lighting system (140, 240, 340, 703) includes a low-beam headlight (148, 738), and the operating sequence of one or more of the plurality of different lights (104, 106, 108, 110, 704, 716, 718, 720, 722, 724) in the first lighting system (701) turns the low-beam headlight (148, 738) on or off.

5. The vehicle lighting system (700) of claim 4, wherein the first lighting system (701) includes a marker light (104), and wherein the low-beam headlight (148, 738) is turned on or off when the marker light (104) is turned on, then off, then on within a predetermined time period,
wherein in particular the predetermined time period ranges from 2 to 5 seconds,
wherein in particular the predetermined time period is 3 seconds.

6. The vehicle lighting system (700) of any preceding claim, wherein the control circuit (150, 153, 250, 550, 742) comprises one or more microprocessors, a low-beam headlight sensor (166, 266, 366), and a marker light sensor (160, 260, 360) coupled to one of the one or more microprocessors, wherein in particular each sensor operably senses the operational state of the corresponding vehicle light, wherein the one of the one or more microprocessors detects the operating sequence based on data from the marker light sensor (160, 260, 360).

7. The vehicle lighting system (700) of claim 4 and/or any of claims 5 and 6 if dependent directly and/or indirectly on claim 4, wherein, upon detecting the operating sequence within the predetermined time period, the one of the one or more microprocessors determines if the low-beam headlight (148, 738) is on or off based on data from the low-beam headlight sensor (166, 266 366), and wherein:
if the low-beam headlight (148, 738) is on, the one of the one or more microprocessors turns the low-beam headlight (148, 738) off; and
if the low-beam headlight (148, 738) is off, the one of the one or more microprocessors turns the low-beam headlight (148, 738) on.

8. A method of operating a vehicle lighting system (700) according to claim 1 for use on a motor vehicle (100) having an auxiliary device (102) assembled on the motor vehicle (100), the method comprising the steps of:
controlling one or more lights of a second lighting system (140, 240, 340, 703) based on an operating sequence of one or more lights of a first lighting system (701), wherein the operating sequence of the one or more lights of the first lighting system (701) comprises turning one of the one or more lights of the first lighting system (701) off, then on, a predetermined number of times within a predetermined time period.

9. The method of claim 8, wherein controlling one or more lights of the second lighting system (140, 240, 340, 703) based on the operating sequence of the one or more lights of the first lighting system (701) comprises controlling a low-beam headlight (148, 738) on the based on the operating sequence of the one or more lights of the first lighting system (701).

10. The method of claim 8 or 9, wherein controlling one or more lights of the second lighting system (140, 240, 340, 703) comprises using a sensor (160, 162, 164, 166, 260, 262, 264, 266, 360, 362, 364, 366) to determine the operating sequence of the one or more lights of the first lighting system (701).

11. The method of claim 10, wherein using a sensor (160, 162, 164, 166, 260, 262, 264, 266, 360, 362, 364, 366) to determine the operating sequence of the one or more lights of the first lighting system (701) comprises using a marker light sensor (160, 260, 360) to determine the operating sequence of the one or more lights of the first lighting system (701), wherein in particular the marker light sensor (160, 260, 360) operably senses the operational state of the marker light (104),
wherein using a marker light sensor (1604, 260, 360) in particular comprises using a Hall-effect sensor.

12. The method of any of claims 8 to 11, wherein turning one of the one or more lights of the first lighting system (701) off, then on, the predetermined number of times within the predetermined time period comprises turning a marker light (104) off, then on, the predetermined number of times within the predetermined time period.

13. The method of claim 12, wherein turning a marker light (104) off, then on, the predetermined number of times within a predetermined time period comprises turning a marker light (104) off, then on, one time within 2 to 5 seconds.

## Patentansprüche

1. Fahrzeug-Beleuchtungssystem (700) zur Verwendung an einem Motorfahrzeug (100) mit einer an dem Motorfahrzeug (100) montierten Zusatzvorrichtung (102), wobei das Fahrzeug-Beleuchtungssystem (700) Folgendes aufweist:
ein erstes Beleuchtungssystem (701), welches dafür ausgelegt ist, an einem Körper des Motorfahrzeugs (100) angebracht zu werden, wobei das erste Beleuchtungssystem (701) eine Mehrzahl unterschiedlicher Lichter (104, 106, 108, 110, 704, 716, 718, 720, 722, 724) aufweist;
ein zweites Beleuchtungssystem (140, 240, 340, 703), welches dafür ausgelegt ist, an der Zusatzvorrichtung (102) angeordnet zu werden, wobei das zweite Beleuchtungssystem (140, 240, 340, 703) eine Mehrzahl unterschiedlicher Lichter (142, 144, 146, 148, 730, 732, 734, 736, 738, 740) aufweist;
einen Steuerkreis (150, 153, 250, 550, 742), der eines oder mehrere der Mehrzahl unterschiedlicher Lichter in dem zweiten Beleuchtungssystem (140, 240, 340, 703) auf der Grundlage eines Betriebsablaufs von einem oder mehreren der Mehrzahl von unterschiedlichen Lichtern in dem ersten Beleuchtungssystem (701) betreibt;
**dadurch gekennzeichnet, dass** das erste Beleuchtungssystem (701) ein Markierungslicht (104) beinhaltet, und dass der Betriebsablauf eines oder mehrerer der Mehrzahl unterschiedlicher Lichter in dem ersten Beleuchtungssystem (701) das Ausschalten, dann das Einschalten des Markierungslichts (104) innerhalb einer vorbestimmten Zeitspanne beinhaltet.

2. Fahrzeug-Beleuchtungssystem (700) nach Anspruch 1,
bei dem die vorbestimmte Zeitspanne im Bereich von 2 bis 5 Sekunden liegt,
bei dem insbesondere die vorbestimmte Zeitspanne 3 Sekunden beträgt.

3. Fahrzeug-Beleuchtungssystem (700) nach Anspruch 1 oder 2, bei dem der Steuerkreis (150, 153, 250, 550, 742) einen oder mehrere Mikroprozessoren aufweist und einen Markierungslicht-Sensor (160, 260, 360), der mit einem der einen oder mehreren Mikroprozessoren gekoppelt ist, wobei insbesondere der Markierungslicht-Sensor (160, 260, 360) funktionell den Betriebszustand des Markierungslichts (104) abfühlt, wobei insbesondere der Markierungslicht-Sensor (160, 260, 360) ein Halleffekt-Sensor ist.

4. Fahrzeug-Beleuchtungssystem (700) nach einem beliebigen der vorhergehenden Ansprüche, bei dem das zweite Beleuchtungssystem (140, 240, 340, 703) ein Abblendlicht (148, 738) beinhaltet, und der Betriebsablauf von einem oder mehreren der Mehrzahl unterschiedlicher Lichter (104, 106, 108, 110, 704, 716, 718, 720, 722, 724) in dem ersten Beleuchtungssystem (701) das Abblendlicht (148, 738) ein- oder ausschaltet.

5. Fahrzeug-Beleuchtungssystem (700) nach Anspruch 4, bei dem das erste Beleuchtungssystem (701) ein Markierungslicht (104) beinhaltet, und bei dem das Abblendlicht (148, 738) ein- oder ausgeschaltet wird, wenn das Markierungslicht (104) innerhalb einer vorbestimmten Zeitspanne eingeschaltet, dann ausgeschaltet, dann eingeschaltet wird,
wobei insbesondere die vorbestimmte Zeitspanne im Bereich von 2 bis 5 Sekunden liegt,
wobei insbesondere die vorbestimmte Zeitspanne 3 Sekunden beträgt.

6. Fahrzeug-Beleuchtungssystem (700) nach einem beliebigen der vorhergehenden Ansprüche, bei dem der Steuerkreis (150, 153, 250, 550, 742) einen oder mehrere Mikroprozessoren, einen Abblendlicht-Sensor (166, 266, 366), und einen Markierungslicht-Sensor (160, 260, 360), der mit einem der einen oder mehreren Mikroprozessoren gekoppelt ist, aufweist, wobei insbesondere jeder Sensor funktionell den Betriebszustand des entsprechenden Fahrzeuglichts abfühlt, wobei der eine der einen oder mehreren Mikroprozessoren den Betriebsablauf auf der Grundlage von Daten von dem Markierungslicht-Sensor (160, 260, 360) erfasst.

7. Fahrzeug-Beleuchtungssystem (700) nach Anspruch 4 und/oder nach einem beliebigen der Ansprüche 5 und 6, insoweit sie direkt und/oder indirekt von Anspruch 4 abhängen, bei dem beim Erfassen des Betriebsablaufs innerhalb der vorbestimmten Zeitspanne der eine der einen oder mehreren Mikroprozessoren auf der Grundlage von Daten von dem Abblendlicht-Sensor (166, 266, 366) feststellt, ob das Abblendlicht (148, 738) ein- oder ausgeschaltet ist, und bei dem:
der eine der einen oder mehreren Mikroprozessoren das Abblendlicht (148, 738) ausschaltet, wenn das Abblendlicht (148, 738) eingeschaltet ist; und der eine der einen oder mehreren Mikroprozessoren das Abblendlicht (148, 738) einschaltet, wenn das Abblendlicht (148, 738) ausgeschaltet ist.

8. Verfahren zum Betreiben eines Fahrzeug-Beleuchtungssystems (700) nach Anspruch 1 zur Verwendung an einem Motorfahrzeug (100), welches eine an dem Motorfahrzeug (100) montierte Zusatzvorrichtung (102) aufweist, wobei das Verfahren folgende Schritte aufweist:
Steuern eines oder mehrerer Lichter eines zweiten Beleuchtungssystems (140, 240, 340, 703) auf der Grundlage eines Betriebsablaufs eines oder mehrerer Lichter eines ersten Beleuchtungssystems (701), wobei der Betriebsablauf des einen oder der mehreren Lichter des ersten Beleuchtungssystems (701) das Ausschalten, dann das Einschalten, eines des einen oder der mehreren Lichter des ersten Beleuchtungssystems (701) eine vorbestimmte Anzahl von Malen innerhalb einer vorbestimmten Zeitspanne aufweist.

9. Verfahren nach Anspruch 8, bei dem das Steuern eines oder mehrerer Lichter des zweiten Beleuchtungssystems (140, 240, 340, 703) auf der Grundlage des Betriebsablaufs des einen oder der mehreren Lichter des ersten Beleuchtungssystems (701) das Steuern eines Abblendlichts (148, 738) auf der Grundlage des Betriebsablaufs des einen oder der mehreren Lichter des ersten Beleuchtungssystems (701) aufweist.

10. Verfahren nach Anspruch 8 oder 9, bei dem das Steuern eines oder mehrerer Lichter des zweiten Beleuchtungssystems (140, 240, 340, 703) das Verwenden eines Sensors (160, 162, 164, 166, 260, 262, 264, 266, 360, 362, 364, 366) aufweist, um den Betriebsablauf des einen oder der mehreren Lichter des ersten Beleuchtungssystems (701) festzustellen.

11. Verfahren nach Anspruch 10, bei dem das Verwenden eines Sensors (160, 162, 164, 166, 260, 262, 264, 266, 360, 362, 364, 366), um den Betriebsablauf des einen oder der mehreren Lichter des ersten Beleuchtungssystems (701) festzustellen, das Verwenden eines Markierungslicht-Sensors (160, 260, 360), um den Betriebsablauf des einen oder der mehreren Lichter des ersten Beleuchtungssystems (701) festzustellen, aufweist, wobei insbesondere der Markierungslicht-Sensor (160, 260, 360) funktionell den Betriebszustand des Markierungslichts (104) abfühlt,
wobei das Verwenden eines Markierungslicht-Sensors (160, 260, 360) insbesondere das Verwenden eines Halleffekt-Sensors aufweist.

12. Verfahren nach einem beliebigen der Ansprüche 8 bis 11, bei dem das Ausschalten, dann Einschalten eines des einen oder der mehreren Lichter des ersten Beleuchtungssystems (701) die vorbestimmte Anzahl von Malen innerhalb der vorbestimmten Zeitspanne das Ausschalten, dann Einschalten, eines Markierungslichts (104) die vorbestimmte Anzahl von Malen innerhalb der vorbestimmten Zeitspanne aufweist.

13. Verfahren nach Anspruch 12, bei dem das Ausschalten, dann Einschalten eines Markierungslichts (104) die vorbestimmte Anzahl von Malen innerhalb einer vorbestimmten Zeitspanne das einmalige Ausschalten, dann Einschalten eines Markierungslichts (104) innerhalb von 2 bis 5 Sekunden aufweist.

## Revendications

1. Système d'éclairage de véhicule (700) pour son utilisation sur un véhicule à moteur (100) présentant un dispositif auxiliaire (102) assemblé sur le véhicule à moteur (100), le système d'éclairage de véhicule (700) comprenant :
un premier système d'éclairage (701) configuré pour être situé sur une carrosserie du véhicule à moteur (100), le premier système d'éclairage (701) présentant une pluralité de feux différents (104, 106, 108, 110, 704, 716, 718, 720, 722, 724) ;
un deuxième système d'éclairage (140, 240, 340, 703) configuré pour être situé sur le dispositif auxiliaire (102), le deuxième système d'éclairage (140, 240, 340, 703) présentant une pluralité de feux différents (142, 144, 146, 148, 730, 732, 734, 736, 738, 740) ;
un circuit de commande (150, 153, 250, 550, 742) faisant fonctionner un ou plusieurs de la pluralité de feux différents dans le deuxième système d'éclairage (140, 240, 340, 703) sur la base d'une séquence de fonctionnement d'un ou plusieurs de la pluralité de feux différents dans le premier système d'éclairage (701) ;
**caractérisé en ce que** le premier système d'éclairage (701) comporte un feu de gabarit (104), et **en ce que** la séquence de fonctionnement d'un ou plusieurs de la pluralité de feux différents dans le premier système d'éclairage (701) comporte l'extinction puis l'allumage du feu de gabarit (104), au cours d'une période de temps prédéterminée.

2. Système d'éclairage de véhicule (700) selon la revendication 1, dans lequel la période de temps prédéterminée va de 2 à 5 secondes,
dans lequel en particulier la période de temps prédéterminée est de 3 secondes.

3. Système d'éclairage de véhicule (700) selon la revendication 1 ou 2, dans lequel le circuit de commande (150, 153, 250, 550, 742) comprend un ou plusieurs microprocesseurs et un capteur de feu de gabarit (160, 260, 360) couplé à l'un des un ou plusieurs microprocesseurs, dans lequel en particulier le capteur de feu de gabarit (160, 260, 360) détecte de manière fonctionnelle l'état de fonctionnement du feu de gabarit (104), dans lequel en particulier le capteur de feu de gabarit (160, 260, 360) est un capteur à effet Hall.

4. Système d'éclairage de véhicule (700) selon une quelconque revendication précédente, dans lequel le deuxième système d'éclairage (140, 240, 340, 703) comporte un feu de croisement (148, 738), et la séquence de fonctionnement d'un ou plusieurs de la pluralité de feux différents (104, 106, 108, 110, 704, 716, 718, 720, 722, 724) dans le premier système d'éclairage (701) allume ou éteint le feu de croisement (148, 738).

5. Système d'éclairage de véhicule (700) selon la revendication 4, dans lequel le premier système d'éclairage (701) comporte un feu de gabarit (104), et dans lequel le feu de croisement (148, 738) est allumé ou éteint lorsque le feu de gabarit (104) est allumé, puis éteint, puis allumé au cours d'une période de temps prédéterminée,
dans lequel en particulier la période de temps prédéterminée va de 2 à 5 secondes,
dans lequel en particulier la période de temps prédéterminée est de 3 secondes.

6. Système d'éclairage de véhicule (700) selon une quelconque revendication précédente, dans lequel le circuit de commande (150, 153, 250, 550, 742) comprend un ou plusieurs microprocesseurs, un capteur de feu de croisement (166, 266, 366), et un capteur de feu de gabarit (160, 260, 360) couplé à l'un des un ou plusieurs microprocesseurs, dans lequel en particulier chaque capteur détecte de manière fonctionnelle l'état de fonctionnement du feu de véhicule correspondant, dans lequel l'un des un ou plusieurs microprocesseurs détecte la séquence de fonctionnement sur la base de données provenant du capteur de feu de gabarit (160, 260, 360).

7. Système d'éclairage de véhicule (700) selon la revendication 4 et/ou l'une quelconque des revendications 5 et 6 si elles dépendent directement et/ou indirectement de la revendication 4, dans lequel, lors de la détection de la séquence de fonctionnement au cours de la période de temps prédéterminée, l'un des un ou plusieurs microprocesseurs détermine si le feu de croisement (148, 738) est allumé ou éteint sur la base de données provenant du capteur de feu de croisement (166, 266, 366), et dans lequel :
si le feu de croisement (148, 738) est allumé, l'un des un ou plusieurs microprocesseurs éteint le feu de croisement (148, 738) ; et
si le feu de croisement (148, 738) est éteint, l'un des un ou plusieurs microprocesseurs allume le feu de croisement (148, 738).

8. Méthode de fonctionnement d'un système d'éclairage de véhicule (700) selon la revendication 1 pour son utilisation sur un véhicule à moteur (100) présentant un dispositif auxiliaire (102) assemblé sur le véhicule à moteur (100), la méthode comprenant les étapes suivantes :
la commande d'un ou plusieurs feux d'un deuxième système d'éclairage (140, 240, 340, 703) sur la base d'une séquence de fonctionnement d'un ou plusieurs feux d'un premier système d'éclairage (701), dans laquelle la séquence de fonctionnement des un ou plusieurs feux du premier système d'éclairage (701) comprend l'extinction puis l'allumage de l'un des un ou plusieurs feux du premier système d'éclairage (701) un nombre prédéterminé de fois au cours d'une période de temps prédéterminée.

9. Méthode selon la revendication 8, dans laquelle la commande d'un ou plusieurs feux du deuxième système d'éclairage (140, 240, 340, 703) sur la base de la séquence de fonctionnement des un ou plusieurs feux du premier système d'éclairage (701) comprend la commande d'un feu de croisement (148, 738) sur la base de la séquence de fonctionnement des un ou plusieurs feux du premier système d'éclairage (701).

10. Méthode selon la revendication 8 ou 9, dans laquelle la commande d'un ou plusieurs feux du deuxième système d'éclairage (140, 240, 340, 703) comprend l'utilisation d'un capteur (160, 162, 164, 166, 260, 262, 264, 266, 360, 362, 364, 366) pour déterminer la séquence de fonctionnement des un ou plusieurs feux du premier système d'éclairage (701).

11. Méthode selon la revendication 10, dans laquelle l'utilisation d'un capteur (160, 162, 164, 166, 260, 262, 264, 266, 360, 362, 364, 366) pour déterminer la séquence de fonctionnement des un ou plusieurs feux du premier système d'éclairage (701) comprend l'utilisation d'un capteur de feu de gabarit (160, 260, 360) pour déterminer la séquence de fonctionnement des un ou plusieurs feux du premier système d'éclairage (701), dans laquelle en particulier le capteur de feu de gabarit (160, 260, 360) détecte de manière fonctionnelle l'état de fonctionnement du feu de gabarit (104),
dans laquelle l'utilisation d'un capteur de feu de gabarit (160, 260, 360) comprend en particulier l'utilisation d'un capteur à effet Hall.

12. Méthode selon l'une quelconque des revendications 8 à 11, dans laquelle l'extinction puis l'allumage de l'un des un ou plusieurs feux du premier système d'éclairage (701) le nombre prédéterminé de fois au cours de la période de temps prédéterminée comprend l'extinction puis l'allumage d'un feu de gabarit (104) le nombre prédéterminé de fois au cours de la période de temps prédéterminée.

13. Méthode selon la revendication 12, dans laquelle l'extinction puis l'allumage d'un feu de gabarit (104) le nombre prédéterminé de fois au cours d'une période de temps prédéterminée comprend l'extinction puis l'allumage d'un feu de gabarit (104) une fois en l'espace de 2 à 5 secondes.
